# EUROPEAN PATENT SPECIFICATION

(11) **EP 2 194 316 B1**
(45) Date of publication and mention of the grant of the patent: **16.05.2012**
(21) Application number: 08253889.3
(22) Date of filing: 05.12.2008
(51) Int. Cl.: F21V 3/00, H01H 23/14, F21V 23/04

(54) **Electric lamp device**
Elektrische Lampenvorrichtung
Dispositif de lampe électrique

(43) Date of publication of application: 09.06.2010
(73) Proprietor: Yuen, John Se-Kit, Kowloon, Hong Kong (CN)
(72) Inventor: Yuen, John Se-Kit, Kowloon, Hong Kong (CN)
(74) Representative: Price, Paul Anthony King

(56) References cited:
- EP-A- 1 030 099
- DE-A1- 19 546 716
- ES-U- 268 608
- FR-A- 2 419 463
- GB-A- 1 451 580
- GB-A- 2 332 043
- US-A- 5 580 156
- US-A1- 2002 067 616

## Description

### Field of the Invention

The invention relates generally to an electric lamp device.

### Background of the Invention

A portable LED lamp is described in WO-2006/118656 (Osram Sylvania Inc.). LEDs in a circular configuration project up through a circular reflector and are covered by a circular cover lens. The reflector has a peripheral ring which is rigidly fixed in position and a central disk which is flexibly connected to the peripheral ring by flexible bridges. The central disk of the reflector contains the reflective recesses in which the LEDs are located and the central disk is rigidly fixed, via a coupling, to the cover lens. The cover lens and the central disk of the reflector form an integral unit which can move vertically up and down in order to turn on and off a central switch which controls the LEDs.

There is a need to produce an electric lamp device having an alternative configuration to a circular configuration, such as a generally rectangular configuration which is elongate along a longitudinal axis. Such a generally rectangular configuration would benefit from having a different type of switching arrangement, because the switching arrangement used by Osram for their circular configuration is difficult to apply to a generally rectangular configuration because of the absence of radial symmetry.

With a generally rectangular configuration, it is difficult to engineer (in the manner of Osram) a reflector which has a central portion which is integral with the cover lens and which is able to move up and down in order to activate the switch which controls the LEDs.

GB-A-2332043 discloses a single lens push-push dual lamp assembly for vehicle interiors. It has a housing with a rectangular aperture containing a transparent rectangular lens which may be pushed at either end to switch on and off a respective one of a pair of lamps. The lens may be pushed in its central region to simultaneously switch on and off both of the lamps.

DE-19546716-A1 discloses an interior light for a motor vehicle. A rectangular cover lens has a central portion which is supported on pivots, such that rocking of the lens switches on and off a single lamp via two end switches.

### Summary of the Invention

According to an aspect of the present invention, there is provided an electric lamp device comprising:-
a housing having a generally rectangular aperture defining a longitudinal axis;
a reflector unit mounted within the housing and having a plurality of light sources arranged generally along said longitudinal axis;
a cover positioned over the reflector unit and within the aperture and through which the light sources are visible, wherein the cover is generally rectangular and has first and second ends and a central portion which is pivotably mounted to the housing to permit the first and second ends to have a rocking movement up and down; and
a switch responsive to the rocking movement for switching on and off the light sources;
wherein the cover has a top wall and a peripheral lip which extends down into the aperture of the housing and, at the central portion of the cover, has pivot means for permitting the rocking movement; and
wherein the reflector unit has a peripheral edge defining a generally L-shaped slot between the reflector unit and the aperture of the housing and in which the lip of the cover fits.

This switching arrangement, wherein the cover has a rocking movement and the switch is responsive to the rocking movement, works well with an electric lamp device wherein the light sources are arranged generally along the longitudinal axis and the cover is generally rectangular in shape.

In an embodiment of the invention, the switch is provided at the first end of the cover. For example, the switch may be provided under the first end. This helps to ensure a compact arrangement.

In an alternative embodiment, first and second such switches are provided, with the first switch at the first end of the cover and the second switch at the second end of the cover.

For example, the first switch may be used to switch on the light sources, and the second switch may be used to switch off the light sources. A better alternative is where each switch is able independently both to switch on and switch off the light sources. Thus, the user, by repeated pressing down on the same end of the cover, can switch on, switch off, switch on, etc the light sources. It is preferable for each switch to be provided underneath the respective end of the cover, so that downward rocking movement of that end can be used to press down on the switch.

In a preferred embodiment, the pivot means comprises first and second pivot grooves at laterally opposed sides of the cover. These grooves may be provided in downwardly extending tabs at the midpoint of the cover.

In our current embodiment, the lip of the cover comprises a side wall and a flange structure which extends underneath a top wall of the housing.

The flange structure may serve to limit the extent of the rocking movement of the cover, for example by abutting against the undersurface of the top wall of the housing. Preferably, the flange structure is an annular flange. The flange structure helps to stop the cover from falling out of the housing aperture if, for example, the electric lamp device is turned upside down.

In our current embodiment, the flange structure comprises first and second flange portions at longitudinally opposed ends of the cover. These flange portions may be part of the annular flange.

Also in our current embodiment, the lip comprises one or more tabs at the longitudinally opposed ends of the cover for operating the switch(es) in response to the rocking movement.

For example, if a switch is underneath the tab, then downward rocking movement causes the tab to press down on the switch and operate the switch by turning the switch on or off. With switches at both ends of the cover, the two tabs are able to operate one of the switches whichever way the cover rocks.

Preferably, the or each tab is positioned above its respective switch without being connected thereto, so that an initial amount of the rocking movement needs to occur before the tab comes into contact with the switch and starts to operate the switch. This helps to prevent light touching of the cover by a user from causing inadvertent or unwanted switching on or off of the light sources. The user must apply a sustained and intentional pushing force to one of the ends of the cover.

If the generally L-shaped slot is annular, it helps to ensure that the inside of the housing is hidden from view and it makes it less likely that dirt or the like will pass between the reflector unit and the aperture and into the housing.

Preferably, the lip of the cover is also generally L-shaped in order to complement the shape of the slot and to more effectively stop dirt from entering the housing.

The part of the slot defined by the reflector unit may be defined by a generally L-shaped peripheral lip of the reflector unit. By making the peripheral edge of the reflector unit thin, in the form of a lip, material is saved in the manufacture of the reflector unit and its weight is reduced.

The reflector unit may comprise a top surface having reflector recesses therein, and the light sources are positioned at the bottom of the reflector recesses.

In our current embodiment, the reflector unit comprises a top wall and the reflector recesses comprise inverted domes beneath the top wall.

Such a reflector unit may conveniently be moulded from plastic material. Preferably, the top wall has a flat top surface.

The reflector recesses may be in a straight line, along the longitudinal axis of the aperture, in order to minimise the width of the top wall. For example, if the recesses were in a slightly zigzag line, a wider top wall would be required.

In our current embodiment, the electric lamp device further comprises a printed circuit board on which the light sources are mounted, wherein the printed circuit board is positioned underneath the reflector unit with the light sources projecting up into apertures at the bottom of the reflector recesses.

For example, each inverted dome may have an aperture at its apex. The reflector unit may be moulded to have a collar with a central aperture at the apex of each inverted dome. The collar may function as a foot which sits on the printed circuit board.

In our current embodiment, the printed circuit board is located on supports extending up from a bottom wall of the housing, the reflector unit is located on supports extending up from the bottom wall of the housing, and the reflector unit serves to hold in position the printed circuit board.

For example, this may be achieved by feet of the inverted domes sitting on the printed circuit board.

During assembly of the electric lamp device, the printed circuit board may be fitted on its supports (e.g. snap fitted into position). Then, the reflector unit may be fitted on its supports (e.g. snap fitted). This is a simple and efficient way of assembling the major internal components (the printed circuit board and the reflector unit) to a bottom part of the housing having the bottom housing wall. Then, the cover may be positioned above the reflector unit. A top part of the housing having the aperture may then be fitted (e.g. snap fitted) to the bottom part of the housing.

In our current embodiment, the or each switch is mounted on an end of the printed circuit board beyond the light sources.

This helps to simplify the internal construction of the electric lamp device, because only a single module (the printed circuit board with its light sources, switch(es) and circuitry) needs to be assembled into position inside the housing compared with, for example, having to separately fix the switch(es) to the housing independently of the printed circuit board.

In our current embodiment, the housing has first and second pivot pins at respective sides of the cover and on which the cover is pivotably mounted.

For example, for each pivot pin, a support structure may project up from the bottom of the housing and the pivot pin is provided at the top of the support structure. The support structure may comprise a pair of spaced apart plates and the pivot pin extends between the top ends of the plate. If the cover is provided with pivot grooves, they may rest on the pivot pins.

The generally rectangular aperture of the housing may have a shape wherein the elongate aperture has a ratio of longitudinal length to transverse width of 3:1 or greater. More preferably, the ratio is 4:1 or greater. More preferably still, the ratio is 5:1 or greater.

Usually, the light sources are LEDs.

In our currently preferred embodiments, each longitudinal half of the reflector unit has at least one of the light sources, more preferably at least two of the light sources.

### Brief description of the drawings

A non-limiting embodiment of the present invention will now be described with reference to the accompanying drawings.

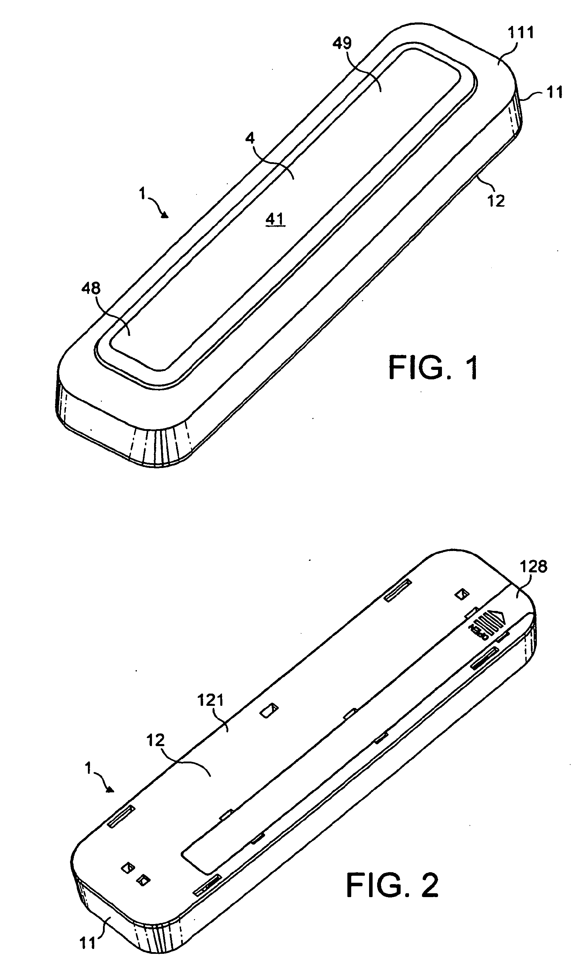

Fig. 1 is a top perspective view of an electric lamp device in accordance with the present invention.
Fig. 2 is an underneath perspective view of the electric lamp device of Fig. 1.

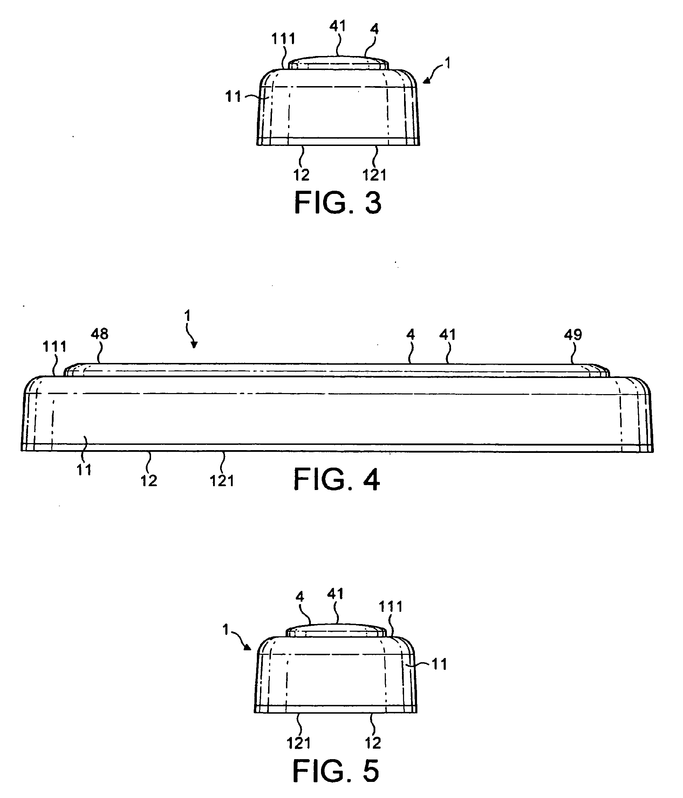

Figs. 3, 4, 5 and 6 are end, side, other end and top views respectively of the electric lamp device of Fig. 1.
Fig. 7 is an underneath view of the electric lamp device of Fig. 1.

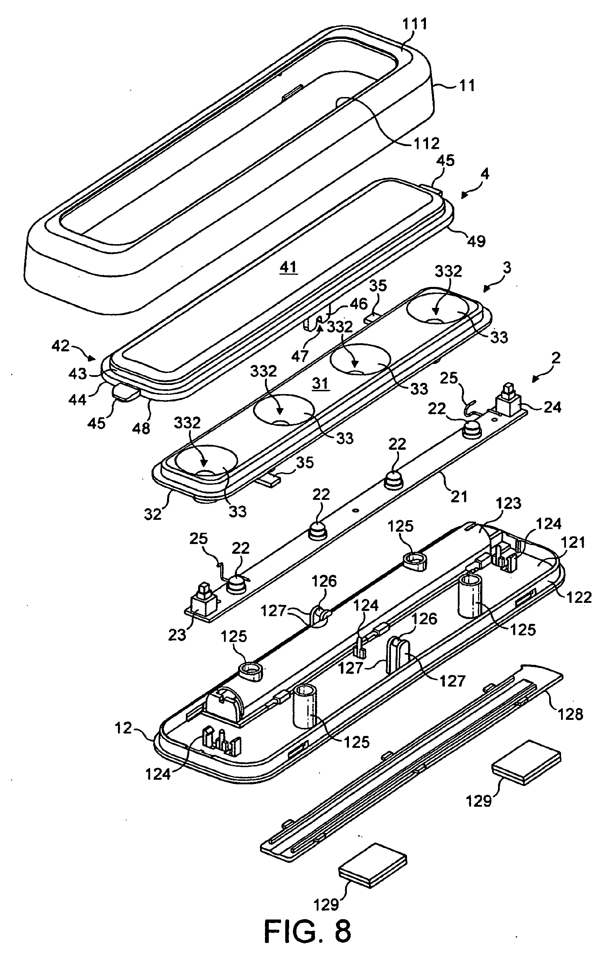

Fig. 8 is an exploded perspective view of the electric lamp device of Fig. 1.

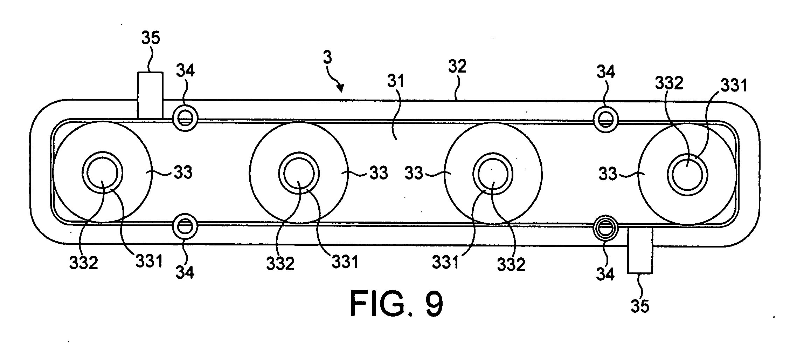

Fig. 9 is an underneath view of a reflector unit shown in Fig. 8.
Fig. 10 is a longitudinal sectional view of the electric lamp device of Fig. 1.

### Description of an Embodiment

The LED lamp device as shown in the Figures comprises a housing 1 having a top part 11 and a bottom part 12.

The housing 1 contains a printed circuit board 2 and a reflector unit 3, which is covered by a transparent cover 4.

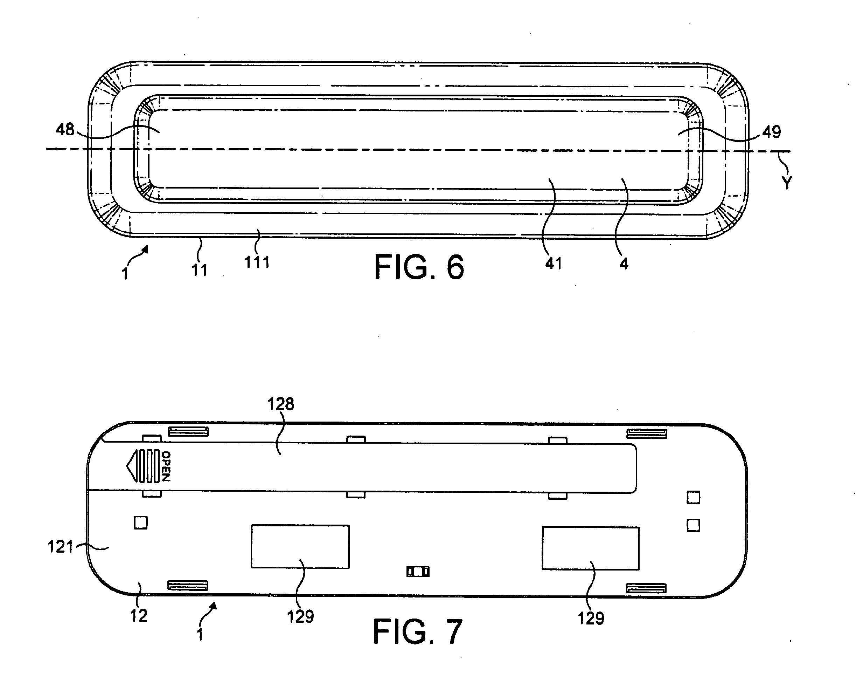

The housing 1 is generally rectangular in plan view and is elongate along a central longitudinal axis Y (see Fig. 6). The top part 11 of the housing 1 has a top wall 111 with a flat top surface containing a generally rectangular aperture 112. The aperture 112 is elongate along the central longitudinal axis Y. The bottom part 12 of the housing 1 has a flat bottom wall 121, an upstanding peripheral wall 122 which snap fits to the top part 11, and a battery compartment 123 which is offset to one side of the central longitudinal axis Y.

First supports 124 positioned along the central longitudinal axis Y enable the printed circuit board 2 to be snap fitted to the bottom part 12 and held in position a predetermined height above the bottom wall 121. Second supports 125 in the form of columns or struts extending up from the bottom wall 121 enable the reflector unit 3 to be snap fitted to the bottom part 12 and held in position at a predetermined height above the bottom wall 121 which is higher than the predetermined height of the printed circuit board 2.

The printed circuit board 2 is in the form of an elongate strip 21 extending along the central longitudinal axis Y and on which is mounted a straight line of spaced-apart LEDs 22 and, at the ends of the strip 21, first and second spring-operated switches 23, 24. Battery connection wires 25 are arranged, when the printed circuit board 2 is assembled into position, to extend into the ends of the battery compartment 123 in order to connect up to the batteries contained in the battery compartment so as to enable the LEDs 22 to be powered under the control of the switches 23, 24.

The reflector unit 3 is generally rectangular and comprises a flat top wall 31 around the periphery of which is an L-shaped annular lip 32 and along the length of which is positioned a line of inverted reflector domes 33. Each dome 33 has at its apex, or bottom, a collar 331 having an aperture 332.

The undersurface of the top wall 31 has four downwardly-extending spigots 34 which snap fit into the top ends of the second supports 125 of the bottom part 12 of the housing 1. When the reflector unit 3 has been snap fitted into position, the collars 331 rest on the top of the strip 21 of the printed circuit board 2 and help to hold the printed circuit board 2 in position on its supports 124. Also, when assembled in position, the reflector unit 3 has the LEDs 22 positioned in the apertures 332 so that the reflective inner surfaces of the domes 33 can focus and direct the light emitted by the LEDs 22 up through the transparent cover 4.

The reflector unit 3 is shown as having a pair of tabs 35, but these tabs are used simply to direct the flow of plastic material during the moulding process, and have no function after that time.

The cover 4 is generally rectangular and has a top wall 41 and a peripheral lip 42 comprising an annular side wall 43 and an annular flange 44 which together are generally L-shaped. At each longitudinal end of the flange 44 is a generally horizontal tab 45 which, in the assembled LED lamp device, is arranged to press down on a respective one of the switches 23, 24 when the cover 4 rocks up and down in the manner of a seesaw.

At the midpoint of the cover 4, the lip 42 includes first and second tabs 46 which project down from the flange 44 at respective sides of the cover 4. The bottom surface of each tab 46 incorporates a pivot groove 47.

The pivot grooves 47 sit on pivot pins 126 of the bottom part 12 of the housing 1. Each pivot pin 126 is positioned between the top ends of a pair of support plates 127 which extend up from the bottom wall 121.

The printed circuit board 2 and the reflector unit 3 are rigidly fixed in position so as to be stationary and the cover 4 moves relative to the reflector unit 3 by pivoting on the pivot pins 126 when the user presses down on one of the ends of the cover 4. This causes the cover 4 to perform a rocking movement in which the pressed end of the cover 4 (say the first end 48) moves downwards and the other end of the cover 4 (say the second end 49) moves upwards. The first end 48, via its tab 45, soon comes into contact with the first switch 23 and presses down on and operates the switch 23. This switches on the LEDs 22. Pressing down on the first end 48 a second time causes the first switch 23 to turn off the LEDs 22. Pressing down a third time causes the LEDs to be turned on again, and so on. In other words, the first switch 23 is latched on or off each time it is pressed. The second switch 24 plays no part in this switching on and off of the LEDs 22 because the second end 49 of the cover 4 does not come into contact with the second switch 24.

When the user presses down on the second end 49 of the cover 4, the first end 48 rises up. The second end 49, via its tab 45, soon comes into contact with the second switch 24 and presses down on and operates the switch 24. This switches on the LEDs 22. Pressing down on the second end 49 a second time causes the second switch 24 to turn off the LEDs 22. Pressing down a third time causes the LEDs to be turned on again, and so on. In other words, the second switch 24 is latched on or off each time it is pressed. The first switch 23 plays no part in this switching on and off of the LEDs 22 because the first end 48 of the cover 4 does not come into contact with the first switch 23.

Thus, either end 48, 49 of the cover 4 may be used independently to control the LEDs 22. Alternatively, the user may alternately press the first end 48 and the second end 49, and this will still cause the LEDs 22 to be switched on, off, on and so on.

The overall width and length of the flange 44 are slightly greater than the width and length of the aperture 112 in order to prevent the cover 4 from falling out of the aperture 112 if the lamp device is turned upside down.

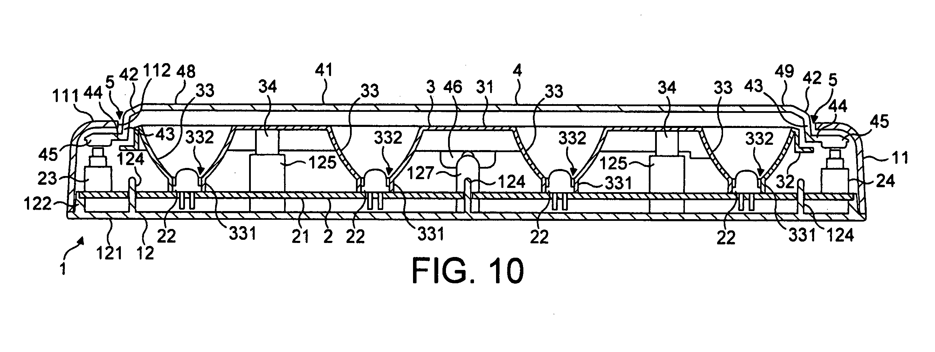

As may be seen from Fig. 10, the top wall 31 of the reflector unit 3 is at generally the same height as the top wall 111 of the housing 1. This is visually pleasing because the top wall 31 appears to be a continuation of the top wall 111. The top wall 41 of the cover 4 is higher than the top wall 111, and this attracts the user's eye and implicitly suggests to the user that the cover 4 is the means for switching on and off the lamp device.

The L-shaped lip 32 of the reflector unit 3 in combination with the top wall 111 adjacent to the aperture 112 defines a generally L-shaped slot 5 in which the lip 42 with its complementary general L-shape is received. The shape of the slot 5 prevents the inside of the housing 1 from being seen through the gap between the reflector unit 3 and the aperture 112, and also helps to make it more difficult for dust and the like to enter the housing.

A battery compartment lid 128 is removable to enable the batteries in the battery compartment 123 to be replaced.

Sticky pads 129 in the form of double-sided adhesive tape may be stuck to the underside of the bottom wall 121 to enable the LED lamp device to be stuck to a wall or the like where a lamp may be needed.

The housing 1, the reflector unit 3 and the cover 4 are moulded from plastic material.

The reflector unit 3 is rigidly fixed relative to the housing 1, and the reflector unit 3 does not have any portion which moves relative to the housing 1. The only component which moves is the cover 4, and the generally rectangular cover 4 is pivotably supported by the housing at approximately the midpoint of the cover 4, so that the cover 4 is able to rock about its central pivot, thereby producing upward and downward movement of the ends 48, 49 of the cover 4, such that the movement of the ends of the cover 4 can be used to activate switch(es) 23, 24 which control the switching on and off of the light sources (the LEDs) 22.

The LEDs 22 are shown as being in a straight line along the longitudinal axis Y, but alternatives such as a zigzag line are possible.

It will be appreciated that the above description is non-limiting and refers to the currently-preferred embodiments of the invention. Many modifications may be made within the scope of the invention as defined in the appended claims.

## Claims

1. An electric lamp device comprising:-
a housing (1) having a generally rectangular aperture (112) defining a longitudinal axis (Y);
a reflector unit (3) mounted within the housing (1) and having a plurality of light sources (22) arranged generally along said longitudinal axis (Y);
a cover (4) positioned over the reflector unit (3) and within the aperture (112) and through which the light sources (22) are visible, wherein the cover (4) is generally rectangular and has first and second ends (48, 49) and a central portion which is pivotably mounted to the housing (1) to permit the first and second ends (48, 49) to have a rocking movement up and down; and
a switch (23) responsive to the rocking movement for switching on and off the light sources (22); **characterised in that**
the cover (4) has a top wall (41) and a peripheral lip (42) which extends down into the aperture (112) of the housing (1) and, at the central portion of the cover (4), has pivot means (47) for permitting the rocking movement; and
wherein the reflector unit (3) has a peripheral edge (32) defining a generally L-shaped slot (5) between the reflector unit (3) and the aperture (112) of the housing (1) and in which the lip (42) of the cover (4) fits.

2. An electric lamp device according to claim 1, wherein the switch (23) is provided at the first end (48) of the cover (4).

3. An electric lamp device according to claim 1, wherein first and second such switches (23, 24) are provided, with the first switch (23) at the first end (48) of the cover (4) and the second switch (24) at the second end (49) of the cover (4).

4. An electric lamp device according to any preceding claim, wherein the pivot means (47) comprises first and second pivot grooves (47) at laterally opposed sides of the cover (4).

5. An electric lamp device according to any preceding claim, wherein the lip (42) of the cover (4) comprises a side wall (43) and a flange structure (44) which extends underneath a top wall (111) of the housing (1).

6. An electric lamp device according to claim 5, wherein the flange structure (44) comprises first and second flange portions at longitudinally opposed ends of the cover (4).

7. An electric lamp device according to claim 5 or 6, wherein the lip (42) comprises one or more tabs (45) at the longitudinally opposed ends of the cover (4) for operating the switch(es) (23, 24) in response to the rocking movement.

8. An electric lamp device according to any preceding claim, wherein the reflector unit (3) comprises a top surface (31) having reflector recesses (33) therein, and the light sources (22) are positioned at the bottom of the reflector recesses (33).

9. An electric lamp device according to claim 8, wherein the reflector unit (3) comprises a top wall (31) and the reflector recesses (33) comprise inverted domes (33) beneath the top wall (31).

10. An electric lamp device according to claim 8 or 9, further comprising a printed circuit board (2) on which the light sources (22) are mounted, wherein the printed circuit board (2) is positioned underneath the reflector unit (3) with the light sources (22) projecting up into apertures (332) at the bottom of the reflector recesses (33).

11. An electric lamp device according to claim 10, wherein the printed circuit board (2) is located on supports (124) extending up from a bottom wall (121) of the housing (1), the reflector unit (3) is located on supports (125) extending up from the bottom wall (121) of the housing (1), and the reflector unit (3) serves to hold in position the printed circuit board (2).

12. An electric lamp device according to claim 2 or 3 and claim 10 or 11, wherein the or each switch (23, 24) is mounted on an end of the printed circuit board (2) beyond the light sources (22).

13. An electric lamp device according to any preceding claim, wherein the housing (1) has first and second pivot pins (126) at respective sides of the cover (4) and on which the cover (4) is pivotably mounted.

## Patentansprüche

1. Elektrische Lampeneinrichtung, welche aufweist:
ein Gehäuse (1), das eine in etwa rechtwinklige Öffnung (112) hat, die eine Längsachse (Y) definiert,
eine Reflektoreinheit (3), die in dem Gehäuse (1) montiert ist und eine Mehrzahl von Lichtquellen (22) hat, die in etwa entlang der Längsachse (Y) angeordnet sind,
eine Abdeckung (4), die über der Reflektoreinheit (3) und innerhalb der Öffnung (112) angeordnet ist und durch welche die Lichtquellen (22) sichtbar sind, wobei die Abdeckung (4) im Wesentlichen rechtwinklig ist und erste und zweite Enden (48, 49) sowie einen zentralen Abschnitt hat, der schwenkbar an dem Gehäuse (1) montiert ist, um zu ermöglichen, dass die ersten und zweiten Enden (48, 49) nach oben und unten eine Hin- und Herbewegung durchführen, und
einen Schalter (23), der auf die Hin- und Herbewegung reagiert, um die Lichtquellen (22) ein- und auszuschalten, **dadurch gekennzeichnet, dass**
die Abdeckung (4) eine obere Wand (41) und eine umlaufende Lippe (42) hat, die sich nach unten in die Öffnung (112) des Gehäuses (1) hinein erstreckt, und die im zentralen Abschnitt der Abdeckung (4) eine Schwenkeinrichtung (47) hat, um die Hin- und Herbewegung zu ermöglichen, und
wobei die Reflektoreinheit (3) eine umlaufende Kante (32) hat, die einen in etwa L-förmigen Schlitz (5) zwischen der Reflektoreinheit (3) und der Öffnung (112) des Gehäuses (1) definiert und in welche die Lippe (42) der Abdeckung (4) hineinpasst.

2. Elektrische Lampeneinrichtung nach Anspruch 1, wobei der Schalter (23) am ersten Ende (48) der Abdeckung (4) vorgesehen ist.

3. Elektrische Lampeneinrichtung nach Anspruch 1, wobei erste und zweite derartige Schalter (23, 24) vorgesehen sind, wobei der erste Schalter (23) sich an dem ersten Ende (48) der Abdeckung (4) und der zweite Schalter (24) sich an dem zweiten Ende (49) der Abdeckung (4) befindet.

4. Elektrische Lampeneinrichtung nach einem der vorstehenden Ansprüche, wobei die Schwenkeinrichtung (47) erste und zweite Schwenknuten (47) an seitlich einander gegenüberliegenden Seiten der Abdeckung (4) aufweist.

5. Elektrische Lampeneinrichtung nach einem der vorstehenden Ansprüche, wobei die Lippe (42) der Abdeckung (4) eine Seitenwand (43) und eine Flanschstruktur (44) aufweist, die sich unter einer oberen Wand (111) des Gehäuses (1) erstreckt.

6. Elektrische Lampeneinrichtung nach Anspruch 5, wobei die Flanschstruktur (44) erste und zweite Flanschabschnitte an in Längsrichtung entgegengesetzten Enden der Abdeckung (4) aufweist.

7. Elektrische Lampeneinrichtung nach Anspruch 5 oder 6, wobei die Lippe (42) eine oder mehrere Laschen (45) an den in Längsrichtung entgegengesetzten Enden der Abdeckung (4) aufweist, um die Schalter (23, 24) in Reaktion auf die Hin- und Herbewegung zu betätigen.

8. Elektrische Lampeneinrichtung nach einem der vorstehenden Ansprüche, wobei die Reflektoreinheit (3) eine obere Fläche (31) aufweist, in welcher Reflektoraussparungen (33) sind, und wobei die Lichtquellen (22) am Grund der Reflektoraussparungen (33) angeordnet sind.

9. Elektrische Lampeneinrichtung nach Anspruch 8, wobei die Reflektoreinheit (3) eine obere Wand (31) aufweist und die Reflektoraussparungen (33) invertierte Kuppeln (33) unter der oberen Wand (31) aufweisen.

10. Elektrische Lampeneinrichtung nach Anspruch 8 oder 9, welche weiterhin eine gedruckte Schaltkreisplatine (2) aufweist, auf welcher die Lichtquellen (22) montiert sind, wobei die gedruckte Schaltkreisplatine unter der Reflektoreinheit (3) positioniert ist, wobei die Lichtquellen (22) nach oben in Öffnungen (332) am Grund der Reflektoraussparungen (33) vorstehen.

11. Elektrische Lampeneinrichtung nach Anspruch 10, wobei die gedruckte Schaltkreisplatine (2) auf Haltern (124) angeordnet ist, die sich von einer unteren Wand (121) des Gehäuses (1) nach oben erstrecken, wobei die Reflektoreinheit (3) auf Halterungen (125) angeordnet ist, die sich von der unteren Wand (121) des Gehäuses (1) nach oben erstrecken, und wobei die Reflektoreinheit (3) dazu dient, die gedruckte Schaltkreisplatine (2) in Position zu halten.

12. Elektrische Lampeneinrichtung nach Anspruch 2 oder 3 und 10 oder 11, wobei der oder jeder Schalter (23, 24) an einem Ende der gedruckten Schaltkreisplatine (2) jenseits der Lichtquellen (22) montiert ist.

13. Elektrische Lampeneinrichtung nach einem der vorstehenden Ansprüche, wobei das Gehäuse erste und zweite Schwenkzapfen (126) an entsprechenden Seiten der Abdeckung (4) hat, auf welchen die Abdeckung (4) schwenkbar montiert ist.

## Revendications

1. Dispositif de lampe électrique comprenant :
un boîtier (1) ayant une ouverture généralement rectangulaire (112) définissant un axe longitudinal (Y) ;
une unité de réflecteur (3) montée à l'intérieur du boîtier (1) et ayant une pluralité de sources de lumière (22) agencées généralement le long dudit axe longitudinal (Y) ;
un couvercle (4) positionné sur l'unité de réflecteur (3) et à l'intérieur de l'ouverture (112) et à travers laquelle les sources de lumière (22) sont visibles, dans lequel le couvercle (4) est généralement rectangulaire et a des première et deuxième extrémités (48, 49) et une partie centrale qui est montée de manière pivotante sur le boîtier (1) pour permettre aux première et deuxième extrémités (48, 49) d'avoir un mouvement basculant vers le haut et vers le bas ; et
un interrupteur (23) sensible au mouvement basculant pour mettre en marche et éteindre les sources de lumière (22) ; **caractérisé en ce que** :
le couvercle (4) a une paroi supérieure (41) et une lèvre périphérique (42) qui s'étend vers le bas dans l'ouverture (112) du boîtier (1) et, au niveau de la partie centrale du couvercle (4), a des moyens de pivot (47) pour permettre le mouvement basculant ; et
dans lequel l'unité de réflecteur (3) a un bord périphérique (32) définissant une fente généralement en forme de L (5) entre l'unité de réflecteur (3) et l'ouverture (112) du boîtier (1) et dans laquelle la lèvre (42) du couvercle (4) s'adapte.

2. Dispositif de lampe électrique selon la revendication 1, dans lequel l'interrupteur (23) est prévu au niveau de la première extrémité (48) du couvercle (4).

3. Dispositif de lampe électrique selon la revendication 1, dans lequel ces premier et deuxième interrupteurs (23, 24) sont prévus avec le premier interrupteur (23) au niveau de la première extrémité (48) du couvercle (4) et le deuxième interrupteur (24) au niveau de la deuxième extrémité (49) du couvercle (4).

4. Dispositif de lampe électrique selon l'une quelconque des revendications précédentes, dans lequel les moyens de pivot (47) comprennent des première et deuxième rainures de pivot (47) sur les côtés latéralement opposés du couvercle (4).

5. Dispositif de lampe électrique selon l'une quelconque des revendications précédentes, dans lequel la lèvre (42) du couvercle (4) comprend une paroi latérale (43) et une structure de rebord (44) qui s'étend sous une paroi supérieure (111) du boîtier (1).

6. Dispositif de lampe électrique selon la revendication 5, dans lequel la structure de rebord (44) comprend des première et deuxième parties de rebord au niveau des extrémités longitudinalement opposées du couvercle (4).

7. Dispositif de lampe électrique selon la revendication 5 ou 6, dans lequel la lèvre (42) comprend une ou plusieurs languettes (45) au niveau des extrémités longitudinalement opposées du couvercle (4) pour actionner l'interrupteur (les interrupteurs) (23, 24) en réponse au mouvement basculant.

8. Dispositif de lampe électrique selon l'une quelconque des revendications précédentes, dans lequel l'unité de réflecteur (3) comprend une surface supérieure (31) ayant des évidements de réflecteur (33) à l'intérieur de cette dernière, et les sources de lumière (22) sont positionnées au fond des évidements de réflecteur (33).

9. Dispositif de lampe électrique selon la revendication 8, dans lequel l'unité de réflecteur (3) comprend une paroi supérieure (31) et les évidements de réflecteur (33) comprennent des dômes inversés (33) sous la paroi supérieure (31).

10. Dispositif de lampe électrique selon la revendication 8 ou 9, comprenant en outre une carte de circuit imprimé (2) sur laquelle les sources de lumière (22) sont montées, dans lequel la carte de circuit imprimé (2) est positionnée au-dessous de l'unité de réflecteur (3) avec les sources de lumière (22) qui font saillie vers le haut dans les ouvertures (332) au fond des évidements de réflecteur (33).

11. Dispositif de lampe électrique selon la revendication 10, dans lequel la carte de circuit imprimé (2) est positionnée sur des supports (124) s'étendant vers le haut à partir d'une paroi inférieure (121) du boîtier (1), l'unité de réflecteur (3) est positionnée sur des supports (125) s'étendant vers le haut à partir de la paroi inférieure (121) du boîtier (1), et l'unité de réflecteur (3) sert à maintenir la carte de circuit imprimé (2) en position.

12. Dispositif de lampe électrique selon la revendication 2 ou 3 et la revendication 10 ou 11, dans lequel le ou chaque interrupteur (23, 24) est monté sur une extrémité de la carte de circuit imprimé (2) au-delà des sources de lumière (22).

13. Dispositif de lampe électrique selon l'une quelconque des revendications précédentes, dans lequel le boîtier (1) a des premier et deuxième pivots (126) au niveau des côtés respectifs du couvercle (4) et sur lequel le couvercle (4) est monté de manière pivotante.
